# EUROPEAN PATENT SPECIFICATION

(11) **EP 1 542 442 B1**
(45) Date of publication and mention of the grant of the patent: **06.10.2010**
(21) Application number: 02760792.8
(22) Date of filing: 30.08.2002
(51) Int. Cl.: H04M 1/253, H04L 12/56

(54) **COMMUNICATION SYSTEM**
KOMMUNIKATIONSSYSTEM
SYSTEME DE COMMUNICATION

(43) Date of publication of application: 15.06.2005
(73) Proprietor: FUJITSU LIMITED, Kawasaki-shi, Kanagawa 211-8588 (JP)
(72) Inventor: EGUCHI, Nobuhiko c/o FUJITSU LIMITED, Kawasaki-shi, Kanagawa 211-8588 (JP); YAMADA, K. FUJITSU NISHI-NIHON COMMUN. SYS. LTD, Fukuoka-shi, Fukuola 814-8588 (JP); KAI, K. FUJITSU NISHI-NIHON COMMUN. SYSTEMS LTD., Fukuoka-shi, Fukuoka 814-8588 (JP)
(74) Representative: Stebbing, Timothy Charles
(86) International application number: PCT/JP2002/008850
(87) International publication number: WO 2004/023769

(56) References cited:
- EP-A- 0 877 532
- WO-A-01/49060
- WO-A-01/65786
- WO-A-98/30008
- JP-A- 11 168 773
- JP-A- 2000 507 417
- JP-A- 2001 186 240
- JP-A- 2002 051 146
- JP-A- 2002 084 369
- JP-A- 2002 101 198
- US-A- 4 932 050
- US-A1- 2001 012 282
- US-A1- 2002 016 174

## Description

### Technical Field

This invention relates to a communication system and, more particularly, to a communication system for audio communication over a network.

### Background Art

Recently, as more access circuits including xDSLs, cable internets, optical fibers, and wireless circuits are used in a broadband and network-related devices become increasingly sophisticated, the broadband spreads rapidly. This results in offering various applications and services on an Internet Protocol (IP) network.

Specifically, IP phone (Internet phone) services come into practical use, which realize audio communication over IP networks with a Voice over IP (VoIP) technology. Instead of the existing telephones, IP phones are considered as the feature for cheap communication. Therefore, as a network technology advances, IP phones will increasingly spread.

As the IP phone services spread, more users use both the IP phone services and the mobile phone services. For example, while an IP phone system is set up so as to cover all branches of a company, workers move around with their mobile phones.

There is a conventional technique for Internet phones in which a called Internet phone automatically receives a call even while it is not connected to the Internet through a dial-up connection (for example, Japanese Unexamined Patent Publication No. 2001-177663, paragraph [0025] to [0028], FIG. 1).

In an environment where users can use both IP phones and mobile phones, a caller normally cannot know whether a receiver is near an IP phone. If the caller calls to an IP phone that is considered as being near the receiver and the receiver is not near the IP phone actually, the caller calls the receiver's mobile phone this time. This takes time and is troublesome.

Further, the IP phone network and the mobile phone network are independently set up. Therefore, there are only a few services to make a call from an IP phone to a mobile phone and the services use a gateway to connect the IP network and the mobile phone network. Since a charge for communication between an IP phone and a mobile phone is more expensive than that for communication between mobile phones, what a caller and a receiver who can both use IP phones have communication from an IP phone to a mobile phone is waste of money. In short, callers cannot effectively use the IP phones and the mobile phones if they cannot know whether receivers are near IP phones.

Note that the above-described conventional technique relates to a dial-up connection of Internet phones and is not considered for appropriate integration control of IP phones and mobile phones.

EP 0877532 discloses a system for transferring a call to a mobile station through an IP network. In the system, when a user's mobile station is connected to an associated terminal device this is detected by the terminal device and calls to the mobile station are routed through the IP network based on the IP address of the mobile station as opposed to through the mobile network based on the mobile telephone number of the mobile station.

US 2001/0012282 discloses a telecommunication system wherein a device has dual-mode functionality such that it is capable of communicating through both a mobile network and a local area network (LAN) or wide area network (WAN).

### Disclosure of the Invention

The present invention has been made in view of foregoing and intends to provide a communication system capable of improving a telephone communication service by effectively integrating communications with IP phones and with mobile phones.

The present invention is defined in the independent claims, to which the reader should now refer. Specific embodiments are defined in the dependent claims.

The above and other features and advantages of the present invention will become apparent from the following description when taken in conjunction with the accompanying drawings which illustrate preferred embodiments of the present invention by way of example.

### Brief Description of the Drawings

FIG. 1 is a principle view of a communication system of this invention.
FIG. 2 is a block diagram of a receiving IP phone.
FIG. 3 shows an operation for connection of a mobile phone.
FIG. 4 shows an operation sequence for the connection of the mobile phone.
FIG. 5 shows an operation for establishing communication.
FIGS. 6 and 7 show an operation sequence for establishing the communication.
FIG. 8 is a principle view of another communication system of this invention.
FIG. 9 is a block diagram of a calling IP phone.
FIG. 10 shows an operation for making a call from a mobile phone.
FIGS. 11 and 12 show an operation sequence for making a call from the mobile phone.

Best Mode of Carrying out the Invention Preferred embodiments of this invention will be described below with reference to the accompanying drawings, wherein like reference numerals refer to like elements throughout.

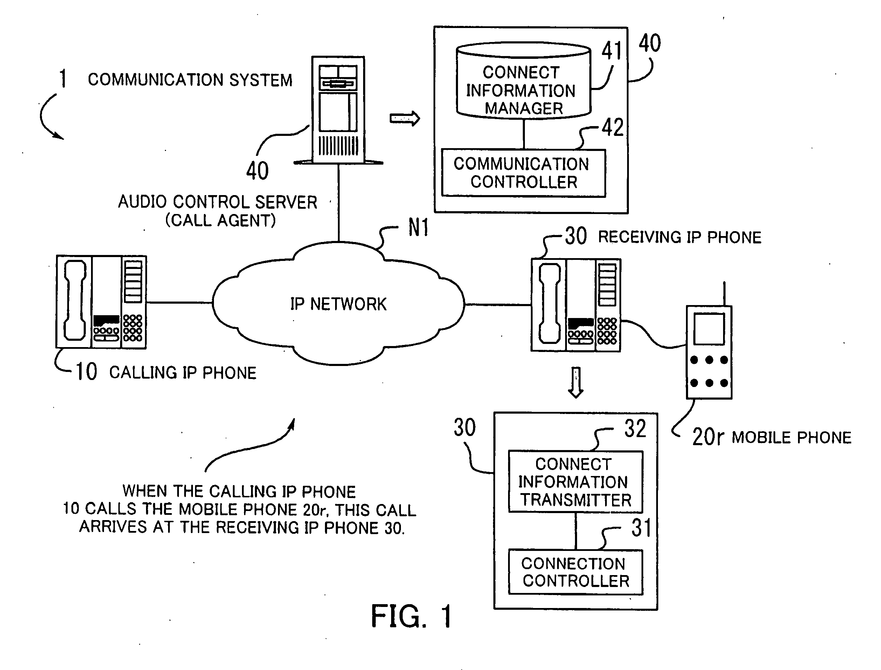

FIG. 1 is a principle view of a communication system of this invention. This communication system 1 is a system for audio communication over an IP network N1 and is composed of a calling IP phone 10, a receiving IP phone 30 to which a mobile phone 20r can connect, and an audio control server 40. In this connection, the calling and receiving IP phones 10 and 30 have the same functions.

The receiving IP phone 30 is composed of a connection controller 31 and a connect information transmitter 32. The connection controller 31 controls a connection interface with the mobile phone 20r, and when the mobile phone 20r is connected thereto, obtains the phone number of this mobile phone 20r. The connect information transmitter 32 informs the audio control server 40 of connect information. This connect information includes identification information and a phone number if obtained. The identification information comprises an IP address and a phone number (IP number). When the audio control server 40 is designed to be capable of converting an IP address to an IP number, the IP number is not necessarily included in the identification information (in other words, when the audio control server 40 performs this conversion, an IP phone does not necessarily give its IP number).

The audio control server 40 is composed of a connect information manager 41 and a communication controller 42. The connect information manager 41 stores and manages connect information received from IP phones over the IP network N1. When receiving a request to call the mobile phone 20r from the calling IP phone 10, the communication controller 42 checks the connect information. If this information indicates that the mobile phone 20r is connected to the receiving IP phone 30, the communication controller 42 makes a call to the receiving IP phone 30 to establish communication between the calling and receiving IP phones 10 and 30.

Note that the audio control server 40 corresponds to a call agent in IP communication using media gateway control protocol (MGCP), or to a gatekeeper when H.323 protocol is used. These cases are different in only a calling procedure and this invention can be applied to both of them. In this description, the audio control server 40 is taken as a call agent 40 (that is, the MGCP is used in processes among the calling IP phone 10, the call agent 40, and the receiving IP phone 30).

As described above, in this communication system 1, if the mobile phone 20r is connected to the receiving IP phone 30 when the calling IP phone 10 calls the mobile phone 20r, this call arrives at the receiving IP phone 30, thereby realizing communication between the IP phones (audio communication over the IP network N1).

Now, IP phones used in this invention will be defined. The IP phones are ones that are used in an audio phone service that is offered in part or all of a network with an IP network technology. IP phone is a higher concept than Internet phone that uses the Internet instead of an IP network and Internet phone is included in IP phone.

The IP phones of this invention are the following devices (1) to (4).
(1) A personal computer which is connected to an IP network (maybe via an access network) and is equipped with a speaker or earphones, and a microphone. Normally, this computer runs software for IP phone.
(2) A general telephone with a special adapter (including a router) being connected to an IP network.
(3) A general telephone with a special adapter being connected to a personal computer being connected to an IP network.
(4) A special IP phone terminal capable of being connected to an IP network.

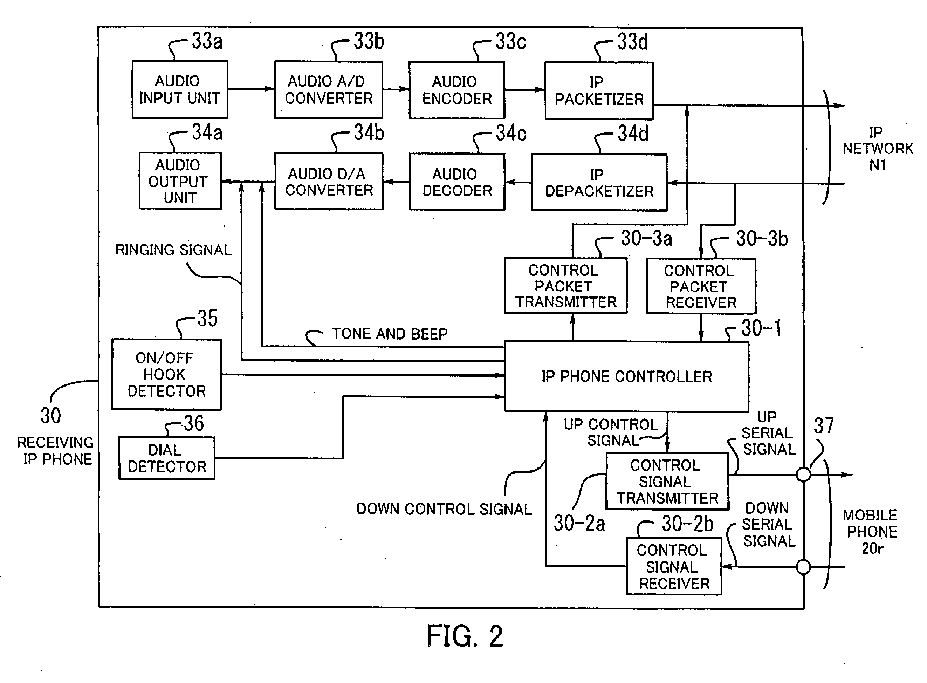

The construction of the receiving IP phone 30 will be now described in detail with reference to FIG. 2 (note that the calling IP phone 10 is identical). The receiving IP phone 30 is composed of an IP phone controller 30-1, a control signal transmitter 30-2a, a control signal receiver 30-2b, a control packet transmitter 30-3a, a control packet receiver 30-3b, an audio input unit 33a, an audio A/D converter 33b, an audio encoder 33c, an IP packetizer 33d, an audio output unit 34a, an audio D/A converter 34b, an audio decoder 34c, an IP depacketizer 34d, an on/off hook detector 35, a dial detector 36, and a phone connector 37.

The audio input unit 33a receives audio from a user. The audio A/D converter 33b digitizes an analog audio signal received from the audio input unit 33a. The audio encoder 33c encodes a digital audio signal received from the audio A/D converter 33b. The IP packetizer 33d converts data encoded by the audio encoder 33c, into IP packets and outputs these to the IP network N1 (transmits VoIP packets). In a case where the packets pass through an access network to the IP network N1, this receiving IP phone 30 has to be equipped with an interface to connect to the access network. However, this matter will not be considered here.

The audio output unit 34a outputs the analog audio signal received from the audio D/A converter 34b. In addition, this unit 34a outputs a tone, a beep or a ringing signal under the control of the IP phone controller 30-1. The audio D/A converter 34b converts the digital audio signal decoded by the audio decoder 34c, into an analog audio signal.

The audio decoder 34c decodes the data received from the IP depacketizer 34b. The IP depacketizer 34d receives VoIP packets from the IP network N1 and extracts data.

The control packet transmitter 30-3a outputs a control packet (other than VoIP packets) to the IP network N1 to communicate with the call agent 40 or another IP phone. The control packet receiver 30-3b receives a control packet from the IP network N1 to communicate with the call agent 40 or another IP phone.

The on/off hook detector 35 detects an on-hook state or an off-hook state and notifies the IP phone controller 30-1 of this detected state. The dial detector 36 detects a user's dialed number and notifies the IP phone controller 30-1 of this number. The IP phone controller 30-1 receives various kinds of information detected inside the receiving IP phone 30, and entirely controls the receiving IP phone 30.

The control signal transmitter 30-2a converts an up control signal received from the IP phone controller 30-1, into an up serial signal, and transmits this to the mobile phone 20r via the phone connector 37. The control signal receiver 30-2b receives a down serial signal from the mobile phone 20r via the phone connector 37, and gives it to the IP phone controller 30-1 as a down control signal.

In this connection, the IP phone controller 30-1, the control signal transmitter 30-2a, the control signal receiver 30-2b, and the control packet transmitter 30-3a operate in association with each other, thereby realizing the functions of the connection controller 31 and the connect information transmitter 32 of this invention.

As an example, the IP phone controller 30-1 controls the control signal transmitter 30-2a and the control signal receiver 30-2b to detect connection with the mobile phone 20r and obtain its phone number. As another example, the IP phone controller 30-1 controls the control packet transmitter 30-3a to transmit connect information to the call agent 40.

The phone connector 37 serving as an interface to connect the receiving IP phone 30 and the mobile phone 20r may be a 16 core interface for the existing personal digital cellular (PDC) and code division multiple access (CDMA) mobile phones.

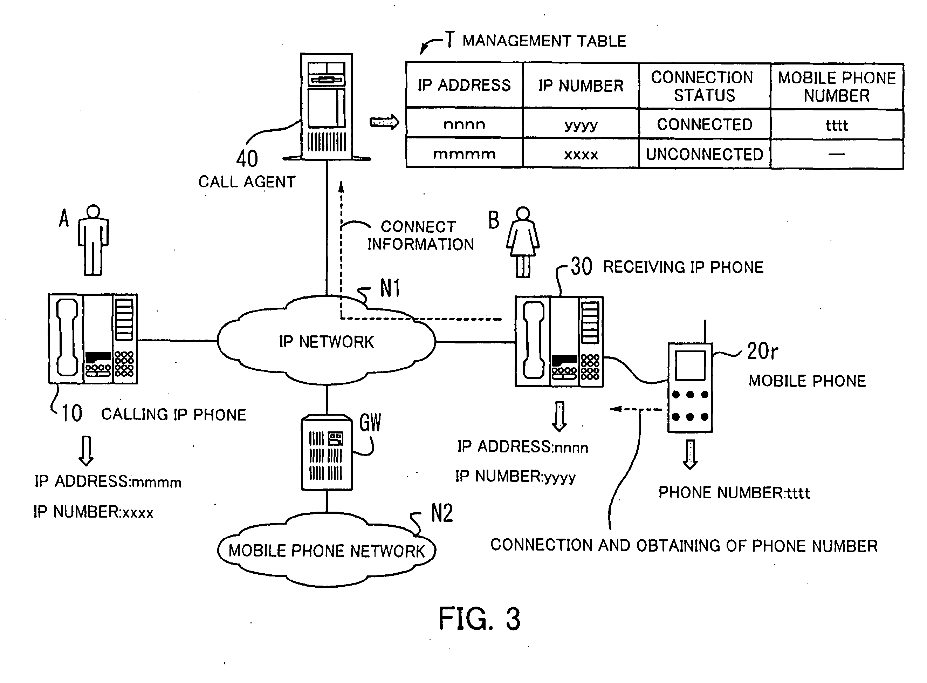

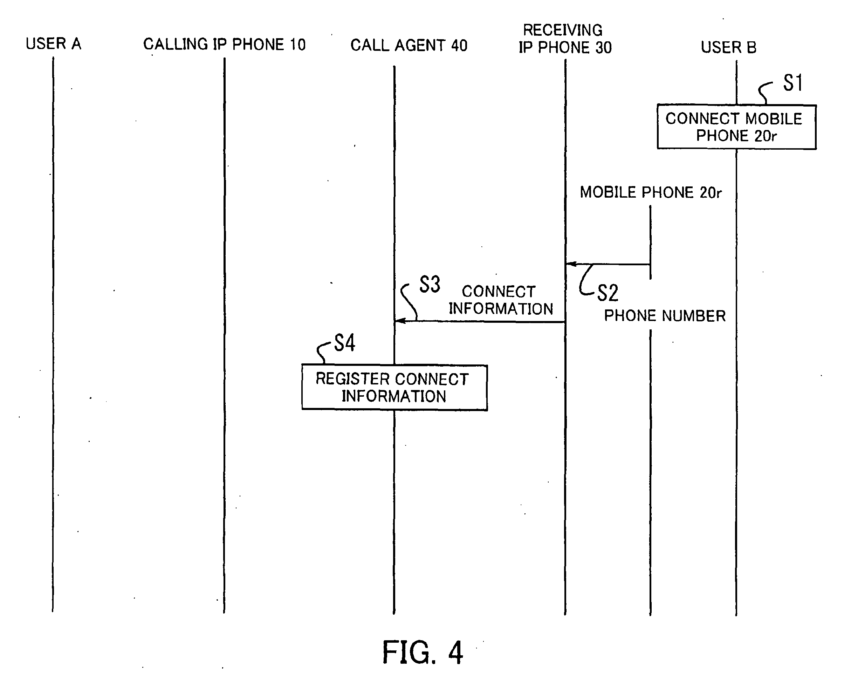

The connection of the mobile phone 20r to the receiving IP phone 30 will be now described with reference to FIGS. 3 and 4.

Referring to FIG. 3, over the IP network N1, the calling IP phone 10, the call agent 40, and the receiving IP phone 30 are connected to each other. The IP network N1 and a mobile phone network N2 are connected via a gateway GW. In addition, the mobile phone 20r is connected to the receiving IP phone 30. A caller and a receiver are referred to as a user A and a user B, respectively.

The IP address and the IP number of the calling IP phone 10 are taken as mmmm and xxxx, respectively. The IP address and the IP number of the receiving IP phone 30 are taken as nnnn and yyyy, respectively. And the phone number of the mobile phone 20r is taken as tttt.

The call agent 40 registers connect information given from the receiving IP phone 30, in a management table T of the connect information manager 41. The management table T comprises items for IP address, IP number, connection status, and mobile phone number. This table shows, as an example, that the receiving IP phone 30 with an IP address of nnnn and an IP number of yyyy is connected to the mobile phone 20r with a phone number of tttt.

FIG. 4 shows a sequence of when the mobile phone 20r is connected.
(S1) The user B connects his/her mobile phone 20r to a nearby IP phone (receiving IP phone 30).
(S2) The IP phone 30 which always monitors the connection status of mobile phones with the connection controller 31 obtains the phone number tttt of the mobile phone 20r when this phone 20r is connected thereto.
(S3) The connect information transmitter 32 of the IP phone 30 transmits the obtained phone number, tttt, to the call agent 40 together with its own IP address, nnnn, and IP number, yyyy. Note that the IP number is not necessarily given to the call agent 40 if the call agent 40 is designed to convert an IP address to an IP number.
(S4) The call agent 40 registers the phone number, tttt, in the management table T of the connect information manager 41 in association with the IP address, nnnn, and IP number, yyyy, of the IP phone 30.

In this connection, when the mobile phone 20r is disconnected, the IP phone 30 detects this matter and notifies the call agent 40 together with its own IP address and IP number that the mobile phone 20r has been disconnected. The call agent 40 receives and registers this information in the management table T.

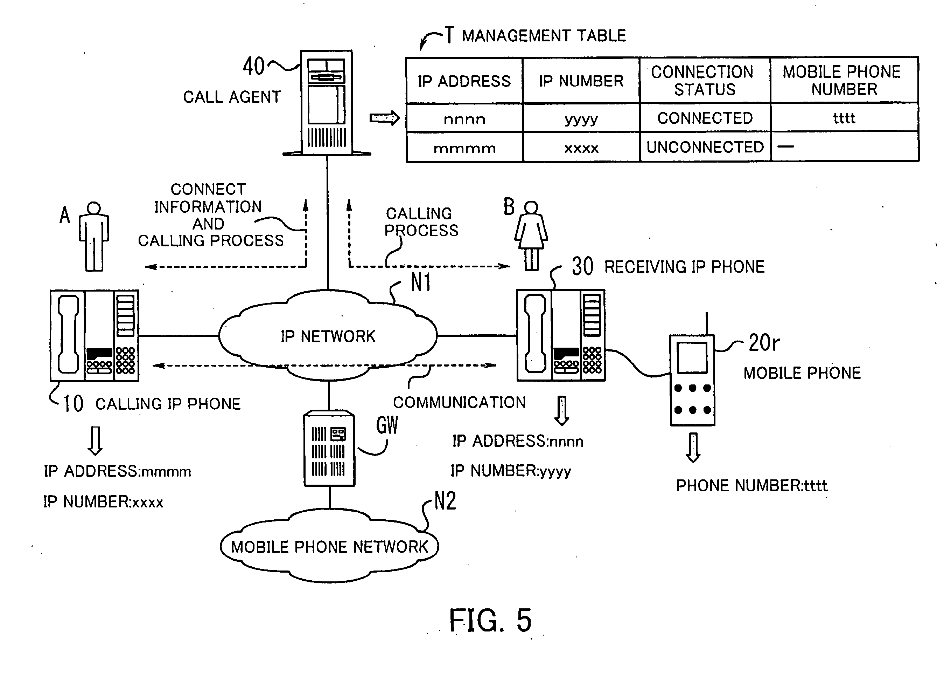

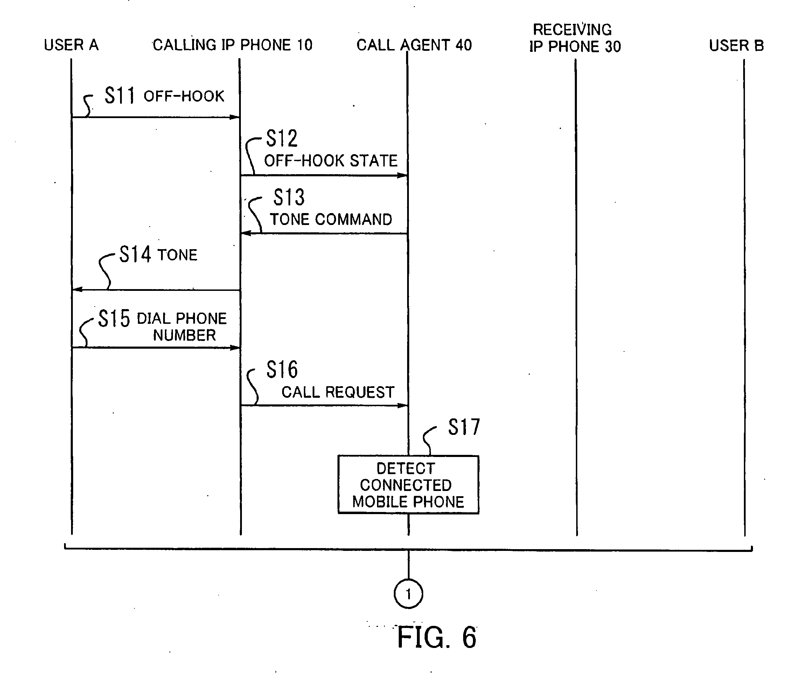

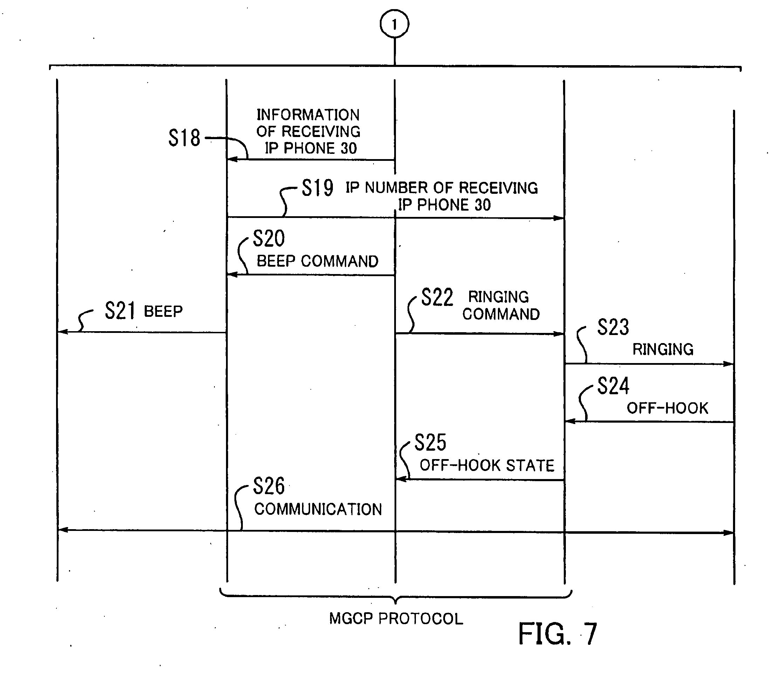

FIGS. 5 to 7 show how to establish communication in a state where the mobile phone 20r is connected. FIG. 5 shows a communication operation and has the same configuration as FIG. 3. FIGS. 6 and 7 show a sequence for establishing the communication. This sequence starts when the user A calls the user B's mobile phone 20r with the calling IP phone 10.
(S11) The user A puts the IP phone 10 off-hook.
(S12) The IP phone 10 notifies the call agent 40 of its off-hook state.
(S13) The call agent 40 sends a tone command to the IP phone 10.
(S14) The IP phone 10 outputs a tone.
(S15) The user A dials the phone number tttt of the mobile phone 20r.
(S16) The IP phone 10 sends a call request to the call agent 40.
(S17) The call agent 40 searches the management table T for the phone number, tttt, to determine which IP phone the mobile phone 20r is connected to. In this example, the call agent 40 recognizes that the mobile phone 20r is connected to the IP phone 30 with an IP address of nnnn and an IP number of yyyy.
(S18) The call agent 40 notifies the IP phone 10 of the IP address, nnnn, and the IP number, yyyy, of the IP phone 30 to which the mobile phone 20r is connected.
(S19) The IP phone 10 notifies the IP phone 30 of the destination's IP number, yyyy.
(S20) The call agent 40 sends a beep command to the IP phone 10.
(S21) The IP phone 10 outputs a beep.
(S22) The call agent 40 sends a ringing command to the IP phone 30.
(S23) The IP phone 30 rings.
(S24) The user B puts the IP phone 30 off-hook.
(S25) The IP phone 30 sends the call agent 40 of the off-hook state.
(S26) The user A and the user B start to communicate by using the IP phones 10 and 30 (a sequence for ending this communication will not be described).

As described above, when the IP phone 10 calls the mobile phone 20r, the IP phone 30, if connected to the mobile phone 20r, receives this call, thereby realizing communication between the IP phones. A big difference between the above communication sequence and the normal MGCP is that the call agent 40 executes steps S17 and S18.

It should be noted that the IP phone 10 can be equipped with a display unit to display information given from the call agent 40 at step SP18 thereon. Such a display unit is very useful in, for example, displaying the connection status of a called mobile phone or the IP number of an IP phone being connected to the mobile phone.

Another embodiment of this invention will be now described. The communication system 1 of this invention described with reference to FIGS. 1 to 7 is a system where, when the calling IP phone 10 calls the mobile phone 20r, the receiving IP phone 30, if connected to the mobile phone 20r, receives this call.

The other embodiment, on the other hand, is a case where the mobile phone 20r is not connected to the receiving IP phone 30. In this case, a mobile phone being connected to the calling IP phone 10 directly calls the mobile phone 20r.

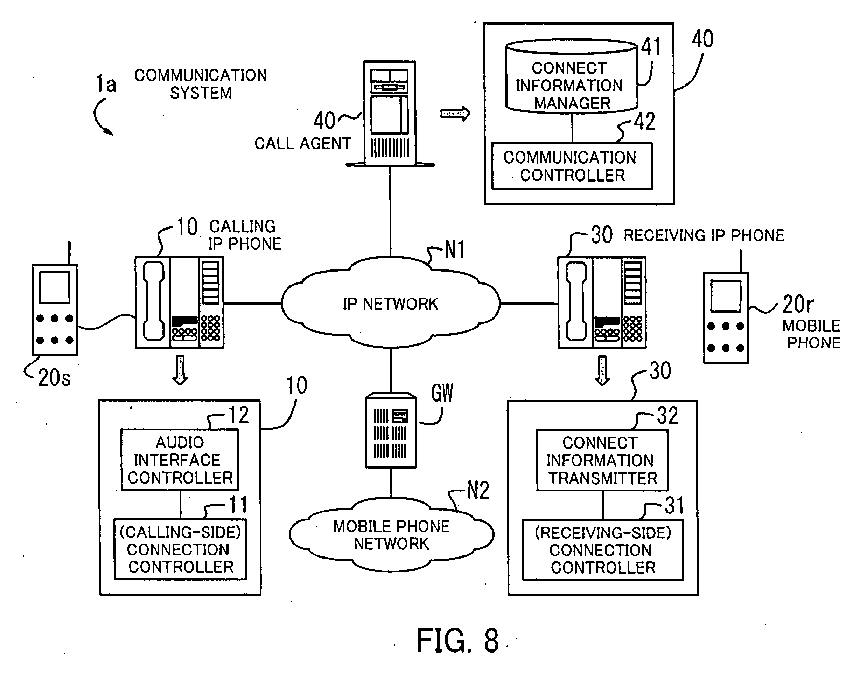

FIG. 8 shows a principle of another communication system of this invention. This communication system 1a is composed of a calling IP phone 10 to which a mobile phone 20s can connect, a receiving IP phone 30 to which a mobile phone 20r can connect, and a call agent 40. These are connected over an IP network N1. In addition, the IP network N1 and a mobile phone network N2 are connected via a gateway GW and this communication system 1a is a system for audio communication over the mobile phone network N2.

The calling IP phone 10 is composed of a calling-side connection controller 11 (hereinafter, referred to as connection controller 11, simply) and an audio interface controller 12. The connection controller 11 controls a connection interface with the mobile phone 20s (this controller 11 has various functions, like the above-described connection controller 31).

When receiving a connection unable notification, which will be described later, from the call agent 40, the audio interface controller 12 makes the mobile phone 20s call the mobile phone 20r by controlling an audio interface with the mobile phone 20s, in order to establish communication between the mobile phones 20s and 20r.

The receiving IP phone 30 and the call agent 40 are identical to those of FIG. 1 (a receiving-side connection controller 31 is referred to as a connection controller 31, simply).

However, if the communication controller 42 of the call agent 40 determines based on connect information that the mobile phone 20r is not connected to the receiving IP phone 30 when receiving a request to call the mobile phone 20r from the calling IP phone 10, this controller 42 sends a connection unable notification to the calling IP phone 30. Then the call agent's process ends.

As described above, this communication system 1a of this invention is a system where, if the mobile phone 20r is not connected to the receiving IP phone 30 when the calling IP phone 10 calls the mobile phone 20r, the mobile phone 20s being connected to the calling IP phone 10 calls the mobile phone 20r to establish communication between the mobile phones (audio communication over the mobile phone network N2).

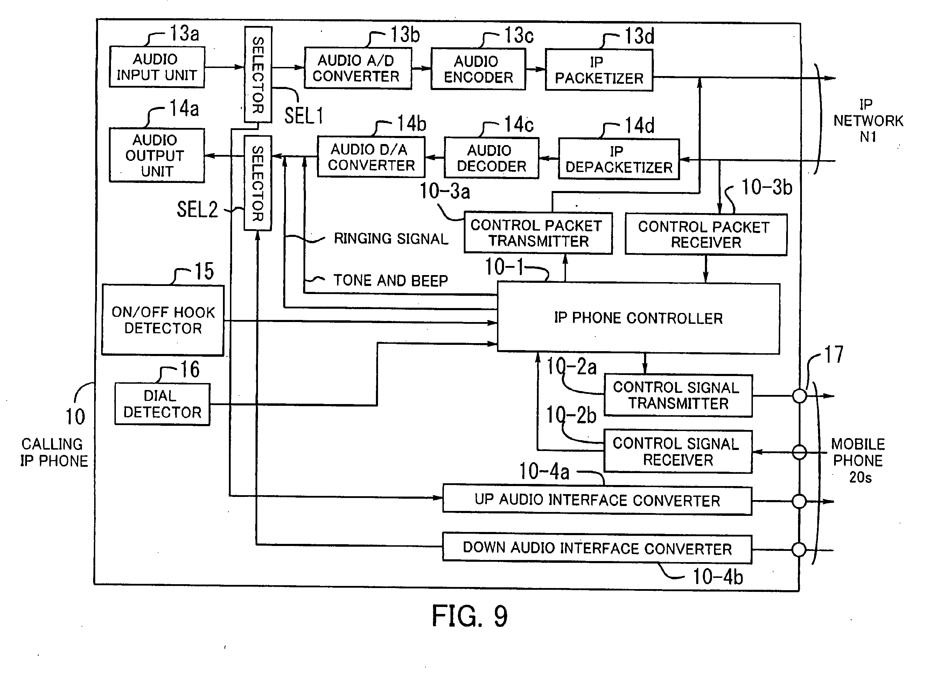

The construction of the calling IP phone 10 will be described in detail with reference to FIG. 9 (the receiving IP phone 30 is identical). In addition to the construction of the IP phone described with reference to FIG. 2, this calling IP phone 10 has a selector SEL1, an up audio interface converter 10-4a, a selector SEL2, and a down audio interface converter 10-4b. Further, a phone connector 17 has an interface for audio signals to be sent and received, in addition to an interface for up/down serial signals. Since the other components are the same (given reference numbers of 10s), only these additional components will be described.

The selector SEL1 selects between the audio A/D converter 13b and the up audio interface converter 10-4a as a destination of an audio input signal under the control of the IP phone controller 10-1. This selector SEL1 normally selects the audio A/D converter 13b. While the IP phone 10 uses the mobile phone 20s to make a call and communication, however, the selector SEL1 selects the up audio interface converter 10-4a. The up audio interface converter 10-4a converts the audio input signal to an audio signal that is then transmitted to the mobile phone 20s.

The selector SEL2 selects a source of an audio signal to be received, under the control of the IP phone controller 10-1. This selector SEL2 normally selects the audio D/A converter 14b. While the IP phone 10 uses the mobile phone 20s to make a call and communication, however, the selector SEL2 selects the down audio interface converter 10-4b. This down audio interface converter 10-4b converts an audio signal received from the mobile phone 20s, into a signal that can be output to the audio output unit 14a.

It should be noted that the IP phone controller 10-1, the control signal transmitter 10-2a, the control signal receiver 10-2b, the up audio interface converter 10-4a, the down audio interface converter 10-4b, and the selectors SEL1 and SEL2 operate in association with each other, thereby realizing the functions of the connection controller 11 and the audio interface controller 12 of this invention.

With the above construction, the calling IP phone 10 is capable of converting between audio signals for the IP phone 10 and audio signals for the mobile phone 20s, and thus the audio input/output units 13a and 14a can allow the mobile phone 20s to be used for communication (that is, by connecting the mobile phone 20s to the calling IP phone 10, a user can use the handset of the calling IP phone 10 to communicate with a user using the mobile phone 20r via the mobile phone 20s). Note that the IP phone controller 10-1 uses the control signal transmitter 10-2a and the control signal receiver 10-2b to control the mobile phone 20s.

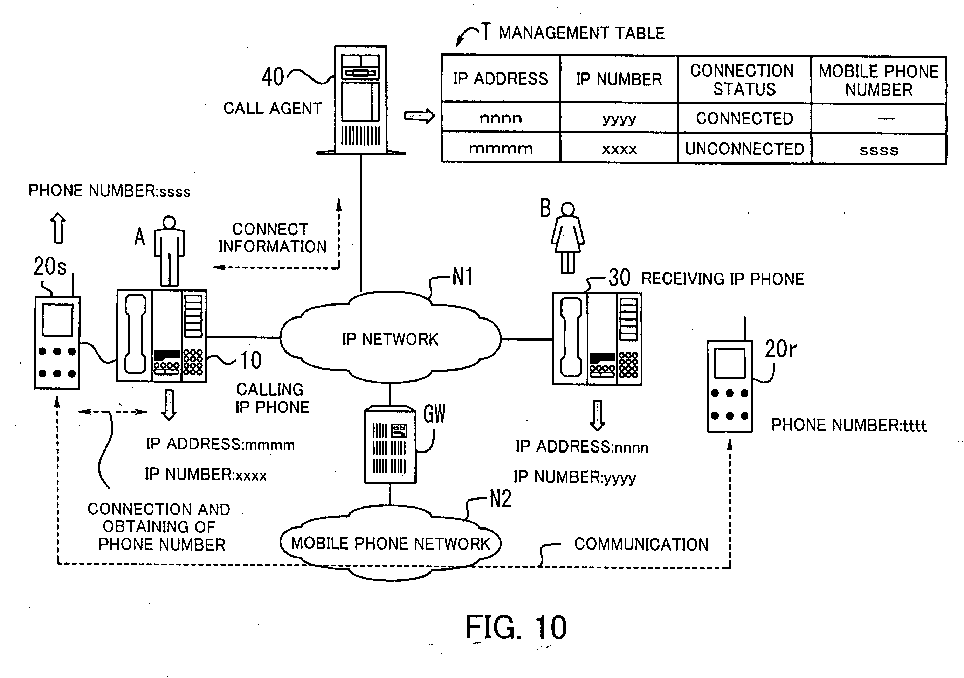

FIGS. 10 to 12 show how the mobile phone 20s being connected to the calling IP phone 10 makes a call. FIG. 10 has the same configuration as FIG. 8. In addition, the management table T of the connect information manager 41 of the call agent 40 shows that the mobile phone 20s with a phone number of ssss is connected to the calling IP phone 10 with an IP address of mmmm and an IP number of xxxx.

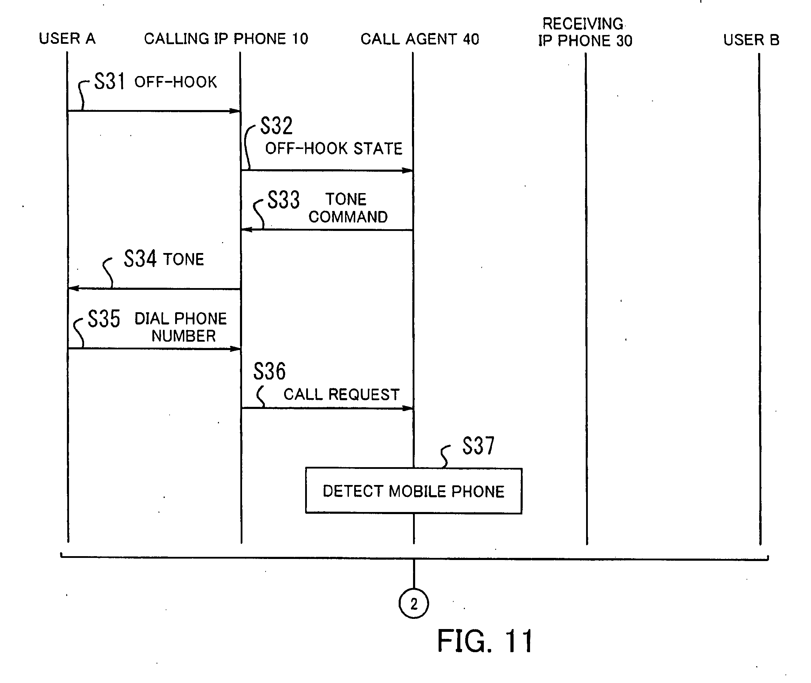

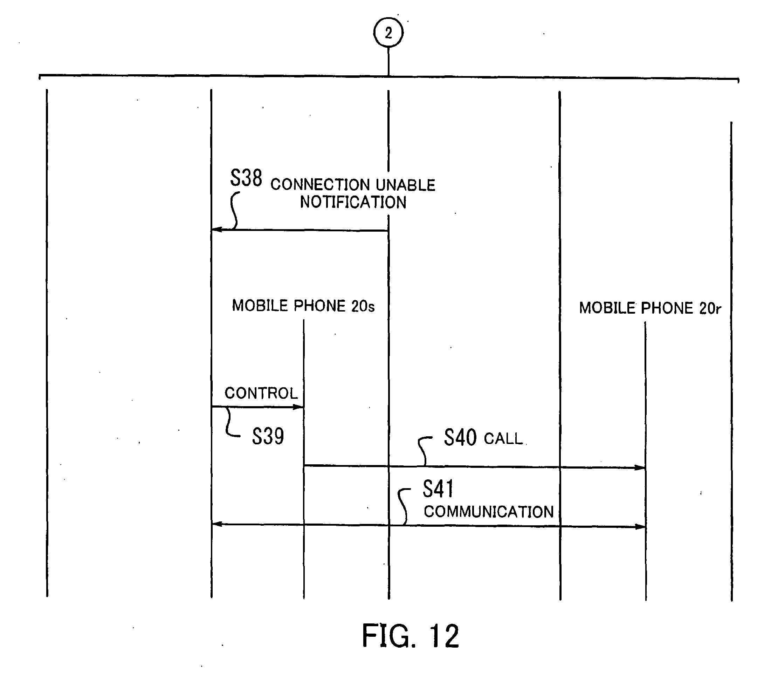

FIGS. 11 and 12 show an operation sequence of how the mobile phone 20s makes a call.
(S31) The user A puts the IP phone 10 off-hook.
(S32) The IP phone 10 notifies the call agent 40 of the off-hook state.
(S33) The call agent 40 sends a tone command to the IP phone 10.
(S34) The IP phone 10 outputs a tone.
(S35) The user A dials the phone number tttt of the mobile phone 20r.
(S36) The IP phone 10 sends a call request to the call agent 40.
(S37) The call agent 40 searches the management table T for the phone number tttt. In this example, this agent 40 determines that this number has not been registered. Simultaneously, the call agent 40 recognizes from the management table T that the calling IP phone 10 is connected to the mobile phone 20s.
(S38) The call agent 40 notifies the IP phone 10 that the mobile phone 20r is not connected to any IP phone. Then the call agent's process ends.
(S39) The IP phone 10 receiving a connection unable notification at step S38 controls the mobile phone 20s being connected thereto, so as to call the phone number tttt.
(S40) The mobile phone 20s calls the mobile phone 20r (over the mobile phone network N2).
(S41) The user B puts the mobile phone 20r off-hook, thereby establishing communication between the users A and B. Although the mobile phone 20s is actually used for this communication, the user A can continue to use the audio input unit 13a and the audio output unit 14a of the IP phone 10 for the communication. A sequence for ending this communication will not be described.

According to this operation sequence, if the mobile phone 20r is not connected to the IP phone 30 when the IP phone 10 calls the mobile phone 20r (if the IP phone 10 receives a connection unable notification from the call agent 40), the mobile phone 20s being connected to the IP phone 10 is used to call the mobile phone 20r, thereby establishing communication between the mobile phones.

In the above description, the calling IP phone 10 automatically uses the mobile phone 20s being connected thereto, to make a call. Alternatively, the calling IP phone 10 can have a function for setting information indicating whether to permit the use of the mobile phone 20s to make a call. In this case, this information is given to the call agent 40 as well and if the information indicates permission, the above operation is executed. If the information indicates prohibition, the call agent 40 makes a call so as to establish communication between the mobile phone 20s and 20r.

A case where the mobile phone 20s is not connected to the IP phone 10 in the communication system 1a will be now described. If the call agent 40 detects that the mobile phone 20r is not connected to any IP phone, the agent 40 makes a call to the mobile phone 20r by connecting the IP network N1 and the mobile phone network N2 via the gateway GW (this is a conventional technique).

Another case where a plurality of mobile phones are connected to the calling IP phone 10 in the communication system 1a will be now described. In this case, the audio interface controller 12 of the calling IP phone 10 selects and controls one out of the plurality of mobile phones to make a call.

Further, in the above description, a connection interface between an IP phone and a mobile phone is shown by a wired line (16 core interface for PDC and CDMA mobile phones). Alternatively, a radio interface such as Bluetooth can be used.

According to this invention, if a mobile phone is connected to a receiving IP phone when a calling IP phone calls the mobile phone, the receiving IP phone receives this call to establish communication between the IP phones, which reduces a call charge.

In other words, while a receiver's mobile phone is connected to an IP phone, this IP phone receives calls made to the receiver's mobile phone. That is, a caller can just call the receiver's mobile phone without considering where the receiver is. Similarly, the caller also can receive calls via his/her IP phone. This is very convenient.

Furthermore, while a receiver does not connect his/her mobile phone to an IP phone (since there is no IP phone near the receiver and the receiver carries his/her mobile phone), the call agent notifies a calling IP phone of this situation. The calling IP phone then uses a mobile phone being connected thereto, to call the receiver's mobile phone, thereby establishing communication between the mobile phones. This can also reduce a call charge as compared with communication from an IP phone to a mobile phone.

The operation sequences of this invention have been described with the MGCP. Alternatively, H.323 protocol can be used. In this case, instead of the call agent, a gatekeeper is installed to make a call.

As described above, a communication system of this invention is composed of a calling IP phone, a receiving IP phone with a function to give connect information when a mobile phone is connected thereto, and an audio control server. When the calling IP phone sends a request to call the mobile phone, the audio control server makes a call to the receiving IP phone when the connect information indicates that the mobile phone is connected to the receiving IP phone. That is, while a receiver's mobile phone is connected to an IP phone, the IP phone receives calls made to the receiver's mobile phone. A caller can just call the receiver's mobile phone without considering where the receiver is. Communication can be made cheaper by using IP phones and thus a service for telephone communication can be improved.

The foregoing is considered as illustrative only of the principle of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

## Claims

1. An IP phone (10) for audio communication over a network (N1), the IP phone being a caller-side IP phone (10) and comprising:
a connection controller (11) operable to control a connection interface with a caller-side mobile phone (20s);
an IP phone controller (10-1) operable to control a telephone connection interface with a receiver-side; and
an audio interface controller (12) operable to control an audio interface,
wherein:
the audio interface controller (12) is operable, when the IP phone controller (10-1) calls a receiver-side mobile phone (20r), to:
control the audio interface, when receiving a notification indicating that the receiver-side mobile phone (20r) is connected to a receiver-side IP phone (30), to establish communication between the caller-side IP phone (10) and the receiver-side IP phone (30); and
control the audio interface, when receiving a connection unable notification indicating that the receiver-side mobile phone (20r) is not connected to the receiver-side IP phone (30) and when the caller-side mobile phone (20s) is connected to the caller-side IP phone (10), to establish communication between the caller-side mobile phone (20s) and the receiver-side mobile phone (20r).

2. The caller-side IP phone (10) according to claim 1, wherein the connection controller (11) is operable to use a radio interface to connect with the caller-side mobile phone (20s) as the connection interface.

3. The caller-side IP phone (10) according to claim 1, wherein:
the connection controller (11) has the connection interface with a plurality of caller-side mobile phones (20s); and
the audio interface controller (12) is operable to select an appropriate caller-side mobile phone (20s) out of the plurality of caller-side mobile phones (20s) and to control the audio interface when receiving the connection unable notification in a case where the plurality of caller-side mobile phones (20s) are connected to the caller-side IP phone (10).

4. The caller-side IP phone (10) according to claim 1, having a function for setting information indicating whether to permit an automatic call from the caller-side mobile phone (20s) being connected to the caller-side IP phone (10), and being operable to notify a server (40) of the information set, the server (40) being included in said network (N1), so that a call is made from the caller-side IP phone (10) when the information indicates permission or from the server (40) when the information indicates prohibition.

5. A telephone communication method for use in a caller-side IP phone (10), the caller-side IP phone being for audio communication over a network (N1), the method comprising:
controlling a connection interface with a caller-side mobile phone (20s);
controlling a telephone connection interface with a receiver-side;
controlling an audio interface; and
when calling a receiver-side mobile phone (20r):
controlling the audio interface, when receiving a notification indicating that the receiver-side mobile phone (20r) is connected to a receiver-side IP phone (30), to establish communication between the caller-side IP phone (10) and the receiver-side IP phone (30) over said network (N1); and
controlling the audio interface, when receiving a connection unable notification indicating that the receiver-side mobile phone (20r) is not connected to the receiver-side IP phone (30) and when the caller-side mobile phone (20s) is connected to the caller-side IP phone (10), to establish communication between the caller-side mobile phone (20s) and the receiver-side mobile phone (20r) over a mobile phone network (N2).

## Patentansprüche

1. IP-Telefon (10) zur Audiokommunikation über ein Netz (N1), welches IP-Telefon ein IP-Telefon (10) der Anruferseite ist und umfasst:
einen Verbindungscontroller (11), der betriebsfähig ist, um eine Verbindungsschnittstelle zu einem Mobiltelefon (20s) der Anruferseite zu steuern;
einen IP-Telefoncontroller (10-1), der betriebsfähig ist, um eine Telefonverbindungsschnittstelle zu einer Empfängerseite zu steuern; und
einen Audioschnittstellencontroller (12), der betriebsfähig ist, um eine Audioschnittstelle zu steuern,
bei dem:
der Audioschnittstellencontroller (12) betriebsfähig ist, wenn der IP-Telefoncontroller (10-1) ein Mobiltelefon (20r) der Empfängerseite anruft, um:
die Audioschnittstelle zu steuern, wenn eine Meldung empfangen wird, die angibt, dass das Mobiltelefon (20r) der Empfängerseite mit einem IP-Telefon (30) der Empfängerseite verbunden ist, um die Kommunikation zwischen dem IP-Telcfon (10) der Anruferseite und dem IP-Telefon (30) der Empfängerseite herzustellen; und
die Audioschnittstelle zu steuern, wenn eine Meldung "Verbindung unmöglich" empfangen wird, die angibt, dass das Mobiltelefon (20r) der Empfängerseite nicht mit dem IP-Telefon (30) der Empfängerseite verbunden ist, und wenn das Mobiltelefon (20s) der Anruferseite mit dem IP-Telefon (10) der Anruferseite verbunden ist, um die Kommunikation zwischen dem Mobiltelefon (20s) der Anruferseite und dem Mobil-telefon (20r) der Empfängerseite herzustellen.

2. IP-Telefon (10) der Anruferseite nach Anspruch 1, bei dem der Verbindungscontroller (11) betriebsfähig ist, um eine Funkschnittstelle zum Verbinden mit dem Mobiltelefon (20s) der Anruferseite als Verbindungsschnittstelle zu verwenden.

3. IP-Telefon (10) der Anruferseite nach Anspruch 1, bei dem:
der Verbindungscontroller (11) die Verbindungsschnittstelle zu einer Vielzahl von Mobiltelefonen (20s) der Anruferseite hat; und
der Audioschnittstellencontroller (12) betriebsfähig ist, um ein geeignetes Mobiltelefon (20s) der Anruferseite von der Vielzahl von Mobiltelefonen (20s) der Anruferseite zu selektieren und die Audioschnittstelle zu steuern, wenn die Meldung "Verbindung unmöglich" in dem Fall empfangen wird, wenn die Vielzahl von Mobiltelefonen (20s) der Anruferseite mit dem IP-Telefon (10) der Anruferseite verbunden ist.

4. IP-Telefon (10) der Anruferseite nach Anspruch 1, das eine Funktion zum Einstellen von Informationen hat, die angeben, ob ein automatischer Anruf von dem Mobiltelefon (20s) der Anruferseite, das mit dem IP-Telefon (10) der Anruferseite verbunden ist, zulässig ist, und betriebsfähig ist, um einem Server (40) die eingestellten Informationen mitzuteilen, welcher Server (40) in dem Netz (N1) enthalten ist, so dass ein Anruf von dem IP-Telefon (10) der Anruferseite erfolgt, wenn die Informationen die Zulässigkeit angeben, oder von dem Server (40), wenn die Informationen das Verbot angeben.

5. Telefonkommunikationwerfahren zur Verwendung in einem IP-Telefon (10) der Anruferseite, wobei das IP-Telefon der Anruferseite zur Audiokommunikation über ein Netz (N1) dient, welches Verfahren umfasst:
Steuern einer Verbindungsschnittstelle zu einem Mobiltelefon (20s) der Anruferseite;
Steuern einer Telefonverbindungsschnittstelle zu einer Empfängerseite;
Steuern einer Audioschnittstelle; und,
wenn ein Mobiltelefon (20r) der Empfängerseite angerufen wird:
Steuern der Audioschnittstelle, wenn eine Meldung empfangen wird, die angibt, dass das Mobiltelefon (20r) der Empfängerseite mit einem IP-Telefon (30) der Empfängerseite verbunden ist, um die Kommunikation zwischen dem IP-Telefon (10) der Anruferseite und dem IP-Telefon (30) der Empfängereite über das Netz (N1) herzustellen; und
Steuern der Audioschnittstelle, wenn eine Meldung "Verbindung unmöglich" empfangen wird, die angibt, dass das Mobiltelefon (20r) der Empfängerseite nicht mit dem IP-Telefon (30) der Empfängerseite verbunden ist, und wenn das Mobiltelefon (20s) der Anruferseite mit dem IP-Telefon (10) der Anruferseite verbunden ist, um die Kommunikation zwischen dem Mobiltelefon (20s) der Anruferseite und dem Mobiltelefon (20r) der Empfängerseite über ein Mobiltelefonnetz (N2) herzustellen.

## Revendications

1. Téléphone IP (10) pour une communication audio par l'intermédiaire d'un réseau (N1), le téléphone IP étant un téléphone IP côté appelant (10) et comportant :
un contrôleur de connexion (11) pouvant contrôler une interface de connexion avec un téléphone mobile côté appelant (20s) ;
un contrôleur de téléphone IP (10-1) pouvant contrôler une interface de connexion téléphonique avec un côté récepteur ; et
un contrôleur d'interface audio (12) pouvant contrôler une interface audio,
dans lequel :
le contrôleur d'interface audio (12) peut, lorsque le contrôleur de téléphone IP (10-1) appelle un téléphone mobile côté récepteur (20r) :
contrôler l'interface audio, lors de la réception d'une notification indiquant que le téléphone mobile côté récepteur (20r) est relié à un téléphone IP côté récepteur (30), pour établir une communication entre le téléphone IP côté appelant (10) et le téléphone IP côté récepteur (30) ; et
contrôler l'interface audio, lors de la réception d'une notification d'impossibilité à se connecter indiquant que le téléphone mobile côté récepteur (20r) n'est pas relié au téléphone IP côté récepteur (30) et lorsque le téléphone mobile côté appelant (20s) est relié au téléphone IP côté appelant (10), pour établir une communication entre le téléphone mobile côté appelant (20s) et le téléphone mobile côté récepteur (20r).

2. Téléphone IP côté appelant selon la revendication 1, dans lequel le contrôleur de connexion (11) peut utiliser une interface radio pour se connecter au téléphone mobile côté appelant (20s) en tant qu'interface de connexion.

3. Téléphone IP côté appelant (10) selon la revendication 1, dans lequel :
le contrôleur de connexion (11) possède une interface de connexion avec une pluralité de téléphones mobiles côté appelant (20s) ; et
le contrôleur d'interface audio (12) peut sélectionner un téléphone mobile côté appelant approprié (20s) parmi la pluralité de téléphones mobiles côté appelant (20s) et pour contrôler l'interface audio lors de la réception de la notification d'impossibilité à se connecter dans le cas où la pluralité de téléphones mobiles côté appelant (20s) sont connectés au téléphone IP côté appelant (10).

4. Téléphone IP côté appelant (10) selon la revendication 1, possédant une fonction pour déterminer une information indiquant s'il faut autoriser un appel automatique provenant du téléphone mobile côté appelant (20s) relié au téléphone IP côté appelant (10), et pouvant notifier au serveur (40) l'information déterminée, le serveur (40) étant inclus dans ledit réseau (N1), de sorte qu'un appel est effectué depuis le téléphone IP côté appelant (10) lorsque l'information indique une autorisation ou depuis le serveur (40) lorsque l'information indique un empêchement.

5. Procédé de communication téléphonique utilisé dans un téléphone IP côté appelant (10), le téléphone IP côté appelant étant conçu pour une communication audio par l'intermédiaire d'un réseau (N1), le procédé comportant :
le contrôle de l'interface de connexion avec un téléphone mobile côté appelant (20s) et ;
le contrôle d'une interface de connexion téléphonique avec un côté récepteur ;
le contrôle d'une interface audio ; et
lors de l'appel d'un téléphone mobile côté récepteur (20r) :
le contrôle de l'interface audio, lors de la réception d'une notification indiquant que le téléphone mobile côté récepteur (20r) est relié à un téléphone IP côté récepteur (30), pour établir une communication entre le téléphone IP côté appelant (10) et le téléphone IP côté récepteur (30) par l'intermédiaire dudit réseau (N1) ; et
le contrôle de l'interface audio, lors de la réception d'une notification d'impossibilité à se connecter indiquant que le téléphone mobile côté récepteur (20r) n'est pas relié au téléphone IP côté récepteur (30) et lorsque le téléphone mobile côté appelant (20s) est relié au téléphone IP côté appelant (10), pour établir une communication entre le téléphone mobile côté appelant (20s) et le téléphone mobile côté récepteur (20r) par l'intermédiaire d'un réseau de téléphone mobile (N2).
